# EUROPEAN PATENT APPLICATION

(11) **EP 4 807 387 A1**
(43) Date of publication of application: **16.09.2026**
(21) Application number: 25163451.5
(22) Date of filing: 13.03.2025
(51) Int. Cl.: G01S 1/70, G01S 5/16, G01S 5/00, G01S 5/02

(54) **LOCATION DETERMINATION**

(71) Applicant: AutoStore Technology AS, 5578 Nedre Vats (NO)
(72) Inventor: KALBERG-PETTERSSON, Ola, 5578 Nedre Vats (NO)
(74) Representative: Kilburn & Strode LLP

(57) **Abstract**

The disclosure relates to a location determination system (500) for determining the location of a robotic vehicle (502) in an automated storage and retrieval system. The location determination system comprises a first light detector (506a) configured to detect a first light signal emitted from a light source (504) at the robotic vehicle, and a second light detector (506b) configured to detect a second light signal emitted from the light source. A location determining module (508) is configured perform triangulation using the first light signal and the second light signal to determine a location of the robotic vehicle in the automated storage and retrieval system.

## Description

### TECHNICAL FIELD

The disclosure relates to location determination. More particularly, it relates to determining the location of a robotic vehicle in an automated storage and retrieval system.

### BACKGROUND

Traditional storage solutions usually involve the arrangement of goods on rows of shelves within a warehouse. The shelf location for each item is recorded in an inventory, and goods are retrieved from the shelves by a stock picker. The shelves are restocked and the inventory updated, as needed, as goods enter and leave the warehouse.

Warehouse workers may be assisted by robotic pickers and by automated inventory management systems. Automated transit systems may also be implemented in traditional warehouse set-ups to move goods from their inventory location to a picking and/or packing station.

An alternative to a traditional warehouse set-up is an automated storage and retrieval system in which robots retrieve items from their logged location within the warehouse and deliver the items to a packing station or port. Such systems can reduce or eliminate the space needed to pass between rows of shelves to access stock, thereby removing the need for broad aisles within the warehouse. One example of such a system involves placing goods in bins or containers that are configured to be stacked, side by side, within a three-dimensional grid. A rail system is arranged on top of the grid, along which robotic container-handling vehicles configured to lift containers from the grid can travel. The container-handling vehicles are configured to transport containers from the grid and to deliver them to ports or stations at the periphery of the grid so that the goods within the container can be picked and packed.

A control system can control movement of the container-handling robotic vehicles in the automated storage and retrieval system. In some cases robots can become lost or positioned at unexpected locations in the system; this risks the robotic container-handling vehicle arriving at an incorrect location for storing or retrieving goods, and also risks collisions between robots when a robot is at an unexpected location.

One or more aspects of the invention of the present application are set out in the claims.

### BRIEF DESCRIPTION OF THE DRAWINGS

The disclosure will now be described in more detail in connection with a number of exemplary embodiments shown in the accompanying drawings, in which:
Fig. 1 shows a perspective view of a storage system comprising a grid and a plurality of robotic container-handling vehicles configured to retrieve and/or rearrange goods stored within the grid;
Fig. 2 shows a top view of the system of Fig. 1;
Fig. 3A shows a side view of a first robotic container-handling vehicle suitable for use in the system of Fig. 1;
Fig. 3B shows a side view of a second robotic container-handling vehicle suitable for use in the system of Fig. 1;
Fig. 3C is a perspective side view of the robot of Fig. 3B;
Fig. 4 shows a computing device for implementing the operations described herein;
Fig. 5 shows a block diagram of a location determination system;
Fig. 6 shows an exemplary representation of the location determination system integrated into the storage system comprising the grid of Fig. 1;
Fig. 7 shows a flow chart of steps involved in a location determination process using the location determination system of Fig. 5; and
Fig. 8 shows an explanatory diagram of triangulation to determine the position of a robotic vehicle.

### DETAILED DESCRIPTION

In overview, the disclosure relates to a location determination system for determining the location of a robotic vehicle in an automated storage and retrieval system. The location determination system comprises a first light detector configured to detect a first light signal emitted from a light source at the robotic vehicle, and a second light detector configured to detect a second light signal emitted from the light source. A location determining module is configured perform triangulation using the first light signal and the second light signal to determine a location of the robotic vehicle in the automated storage and retrieval system.

In this way, locations of robotic vehicles are determined by triangulation. Robotic vehicles that have become lost or positioned at unexpected locations in the system are able to be quickly found. This inhibits the risk the robotic vehicle arriving at an incorrect location, and also inhibits collisions between robots when a robot is at an unexpected location. Efficiency and accuracy in the automated storage and retrieval system is improved and the likelihood of system downtime due to vehicle collisions is reduced.

### Automated storage and retrieval system overview

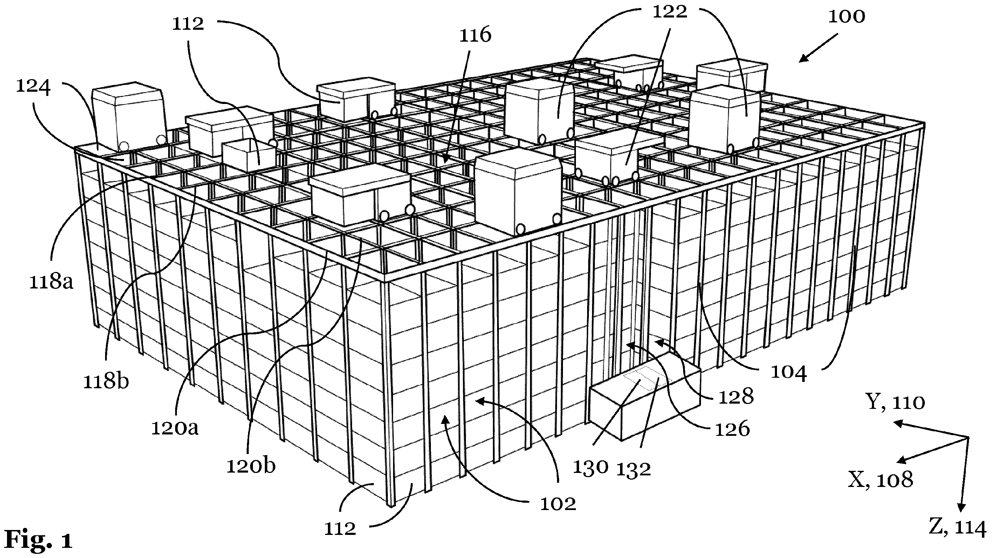

Referring to the embodiment shown in Fig. 1, a grid 100 comprises a frame formed by a plurality of generally rectilinear, adjacent vertical columns 102 formed between vertical frame members 104 and extending in the X and Y directions 108, 110. The grid elements may be fabricated of any appropriate material; for example, the frame members may be formed of extruded aluminium. Storage containers or bins 112 are stacked on top of each other, preferably in a self-supporting manner, in the Z direction 114 in the columns 102, forming a storage volume of storage cells for respective bins 112 extending in the X, Y and Z directions 108, 110, 114.

A rail system or network 116 is formed on top of the grid 100 and comprises pairs of vehicle rails or tracks 118a, 118b and 120a, 120b, respectively extending in the X and Y directions 108, 110. Robotic container-handling vehicles (interchangeably referred to herein as container-handling robotic vehicles), or robots, 122, which can be of a range of size, shape and function, are provided and configured to run on the rails 118, 120 and to transport bins 112 in both the X and Y directions 108, 110. The robots 122 are additionally configured to lift and lower bins 112 from/into the columns 102 in the Z direction 114, the bins 112 optionally being guided by the vertical frame members 104. The robots 122 access the bins 112 via access openings 124 above the columns 102 and formed between the rails 118, 120.

Some columns 102 may be used for alternative purposes than bin storage. For example, port columns 126, 128 comprise port or access columns allowing transfer of a bin 112 in and/or out of the grid 100. Port columns 126, 128 provide a vertical channel for lifting of a bin 112 from, or lowering of a bin 112 to, a port or ports 130, 132. The ports 130, 132 are shown in Fig. 1 at the lowest level of the grid, however ports can be located at any vertical position along the column. The respective port columns 126, 128 can be assigned for removing ('drop-off') and/or returning or delivering ('pick-up') bins 112 from/to the grid 100. The ports 130, 132 are therefore configured to allow bins 112 to be removed and reintroduced (horizontally) into the associated port column. As such, a port 130, 132 can comprise a conveyor (not shown in Fig. 1) onto which a bin 112 may be lowered and transported horizontally out of the port column. The port columns 126, 128 include an opening or access point through which bins 112 can enter and leave the column.

Bins 112 can be transported along the top of the grid 100 to and/or from a port column 126, 128 by robots 122, and from a port 130, 132 to a location outside the grid 100, which may be an access station (not shown) for processing of the bin 112 or its contents, such as a picking station for adding content to, or removing content from, the bin 112. In alternative examples (not shown), the bin 112 may be transported to a port of another grid on the same or another level, or to an external facility. Transport of bins 112 to and from ports 130, 132 may be by any appropriate means (not shown) including conveyors, transport vehicles, lifts or robots.

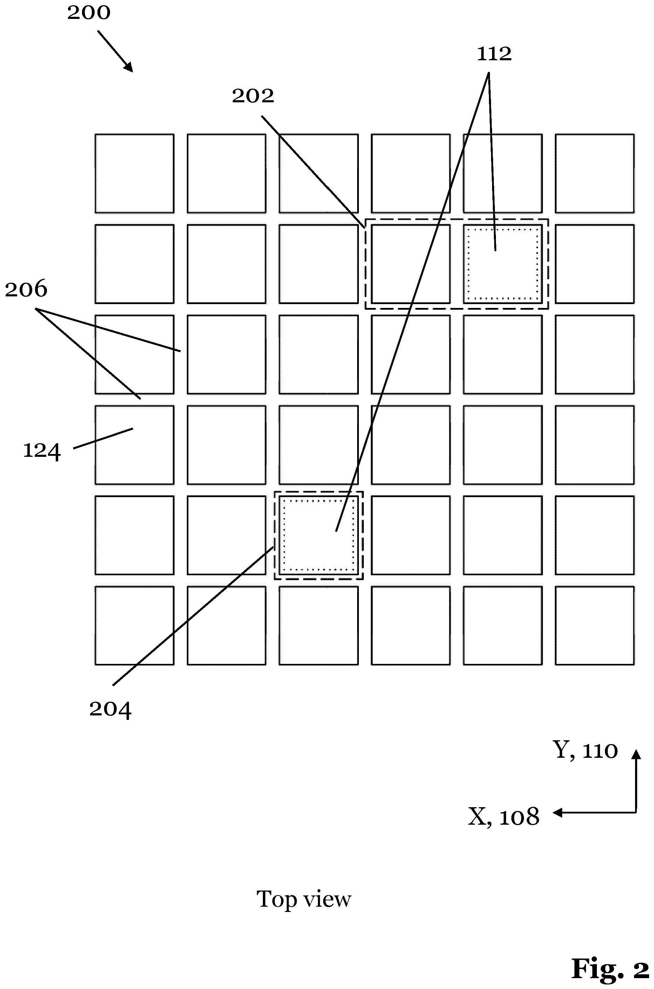

Referring to the embodiment shown in Fig. 2, the X-Y configuration 200 of the rail system 116 can be seen in more detail, together with robots 202, 204 of different types. The rail system includes rails 206 defining between them vertical column access openings 124 for access to bins 112. The rails 206 can be any appropriate type for permitting travel of the robots 202, 204 in the X and Y directions 108, 110 thereon, including (not shown) groove-type rails for receiving vehicle wheels, or protrusion-type rails for engaging wheel recesses. Each rail 206 may comprise a single track or multiple parallel tracks in each of the X and Y directions 108, 110.

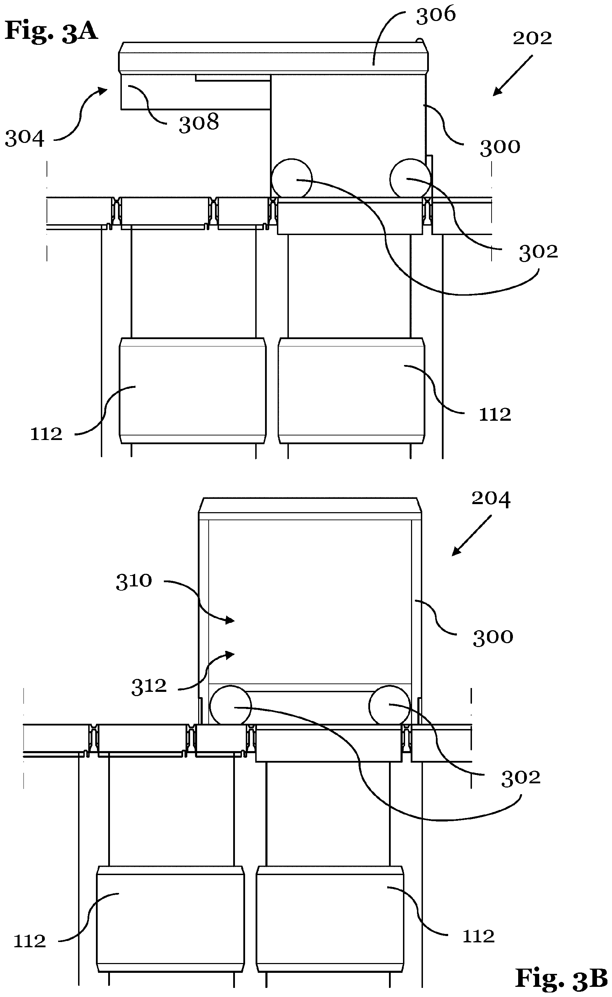

A first, 'cantilever' type of robot 202 is shown in more detail in Fig. 3A and includes a body 300, a set of wheels 302 and a lifting device 304. The body 300 contains operational equipment (not shown) for the robot 202 including drive, power and control systems. The wheels 302 permit movement of the robot 202 in one of the X and Y directions, an additional set of wheels (not visible in this view) permitting movement in the other of the X and Y directions, in both cases along the respective rails or tracks 206. One or both sets of wheels can be raised or lowered to permit selective engagement of the rails for movement in the desired direction. The lifting device 304 includes a cantilever element 306 extending in the X-Y plane from the top of the body 300, and a gripping device 308, which is raisable and lowerable from the cantilever element 306. The gripping device 308 is configured to grip or engage a bin 112; for example, by gripping a part of the bin 112, or by passively or actively engaging a suitably configured part of the bin 112.

A second, 'internal cavity' type of robot 204 is shown in more detail in Fig. 3B and includes, as an alternative to the cantilevered lifting system, an internal cavity 310 within the body 300 and in which the lifting device 312 including a gripping device (not shown) is located. In this case, the body 300 includes the robot's operational equipment and a storage space for one or more bins 112, for use, for example, while transporting the bin 112.

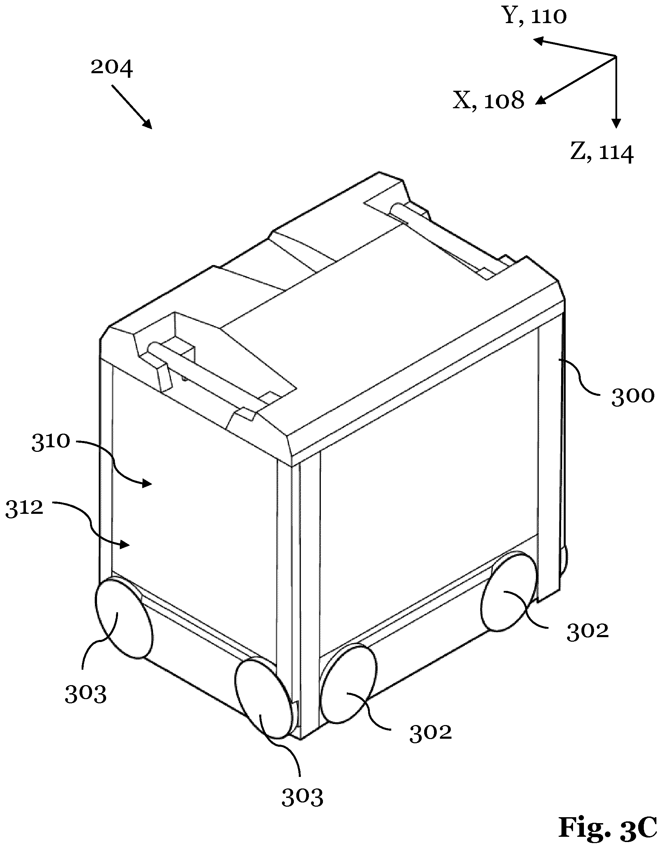

Fig. 3C shows a perspective side view of the robot of Fig. 3B in which the first set of wheels 302 from Fig. 3B are visible. The additional set of wheels referenced above but not shown in Fig. 3B are shown as wheels 303 in Fig. 3C. The additional set of wheels 303 is arranged perpendicular to the first set of wheels 302, to allow rolling of the robot 204 in the X and Y directions on the first and second set of wheels 302, 303 respectively. The first and second set of wheels 302, 303 shown in Fig. 3C may be configured to be independently lowered into engagement with the rails (and conversely raised out of engagement with the rails) to allow the robot 202 to move in the X and Y direction across the arrangement of rails shown in Fig. 2. Although the perspective view shown in Fig. 3C is of the robot 204 of Fig. 3B, it will be appreciated that a similar perpendicular wheel arrangement may be applied to the robot 202 of Fig. 3A.

### Control and monitoring system

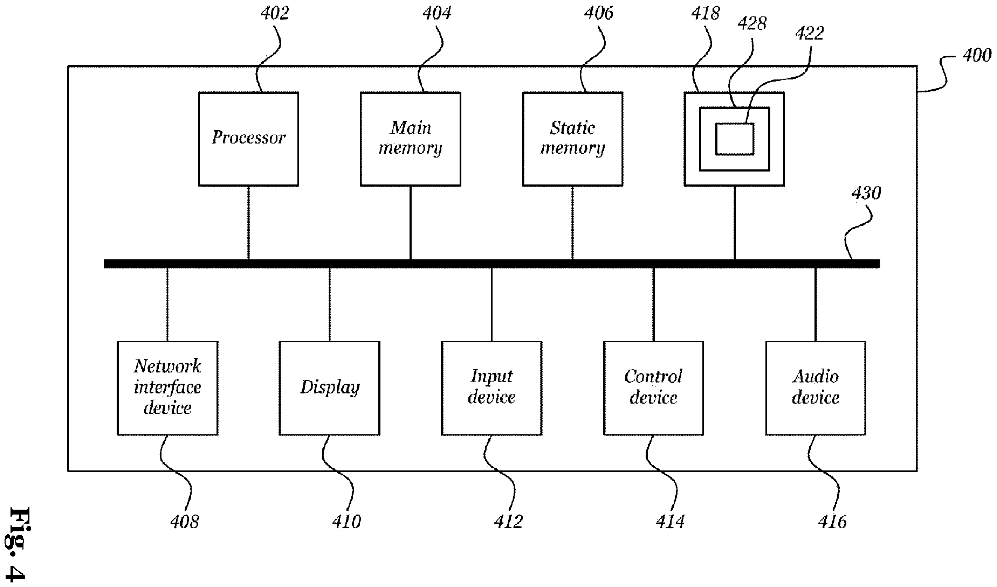

Control and monitoring of the automated storage and retrieval system, including monitoring and storing bin position and controlling bin delivery, retrieval and transport and robot routing and collision avoidance, is performed by a control system shown in Fig. 4 in communication with the robots and/or other controllable system components. Control can be performed locally or remotely and may be implemented by a processing system, for example in the form of a computing device. Accordingly, the methods described herein may form all or part of a computer-implemented method, or a system configured to perform the methods described herein.

With reference to Fig. 4, a processing system 400 suitable for carrying out the methods described herein will now be described. Fig. 4 shows a block diagram of one implementation of a processing system 400 in the form of a computing device within which a set of instructions for causing the computing device to perform any one or more of the methods described herein may be executed. In some implementations, the computing device may be connected (e.g., networked) to other machines in a Local Area Network (LAN), an intranet, an extranet, or the Internet. The computing device may operate in the capacity of a server or a client machine in a client-server network environment, or as a peer machine in a peer-to-peer (or distributed) network environment. The computing device may be a personal computer (PC), a tablet computer, a set-top box (STB), a Personal Digital Assistant (PDA), a cellular telephone, a web appliance, a server, a network router, switch or bridge, or any machine capable of executing a set of instructions (sequential or otherwise) that specify actions to be taken by that machine. Further, while only a single computing device is illustrated, the term 'computing device' shall also be taken to include any collection of machines (e.g., computers) that individually or jointly execute a set (or multiple sets) of instructions to perform any one or more of the methods described herein.

The example processing system 400 includes a processor 402, a main memory 404 (e.g., read-only memory (ROM), flash memory, dynamic random-access memory (DRAM) such as synchronous DRAM (SDRAM) or Rambus DRAM (RDRAM), etc.), a static memory 406 (e.g., flash memory, static random-access memory (SRAM), etc.), and a secondary memory (e.g., a data storage device 418), which communicate with each other via a bus 430.

Processor 402 represents one or more general-purpose processors such as a microprocessor, central processing unit, or the like. More particularly, the processor 402 may be a complex instruction set computing (CISC) microprocessor, reduced instruction set computing (RISC) microprocessor, very long instruction word (VLIW) microprocessor, processor implementing other instruction sets, or processors implementing a combination of instruction sets. Processor 402 may also be one or more special-purpose processors such as an application specific integrated circuit (ASIC), a field programmable gate array (FPGA), a digital signal processor (DSP), network processor, or the like. Processor 402 is configured to execute the processing logic (instructions 422) for performing the operations and steps described herein.

The processing system 400 may further include a network interface device 408. The processing system 400 also may include any of a video display unit 410 (e.g., a liquid crystal display (LCD) or a cathode ray tube (CRT)), an alphanumeric input device 412 (e.g., a keyboard or touchscreen), a cursor control device 414 (e.g., a mouse or touchscreen), and an audio device 416 (e.g., a speaker).

It will be apparent that some features of the processing system 400 shown in Fig. 4 may be absent. For example, the processing system 400 may have no need for display device 410 (or any associated adapters). This may be the case, for example, for particular server-side computer apparatuses which are used only for their processing capabilities and do not need to display information to users. Similarly, user input device 412 may not be required. In its simplest form, processing system 400 comprises processor 402 and main memory 404.

The data storage device 418 may include one or more machine-readable storage media (or more specifically one or more non-transitory computer-readable storage media) 428 on which is stored one or more sets of instructions 422 embodying any one or more of the methods or functions described herein. The instructions 422 may also reside, completely or at least partially, within the main memory 404 and/or within the processor 402 during execution thereof by the processing system 400, the main memory 404 and the processor 402 also constituting computer-readable storage media 428.

The various methods described herein may be implemented by a computer program. The computer program may include computer code arranged to instruct a computer to perform the functions of one or more of the various methods described herein. The computer program and/or the code for performing such methods may be provided to an apparatus, such as a computer, on one or more computer-readable media or, more generally, a computer program product. The computer-readable media may be transitory or non-transitory. The one or more computer-readable media could be, for example, an electronic, magnetic, optical, electromagnetic, infrared, or semiconductor system, or a propagation medium for data transmission, for example for downloading the code over the Internet. Alternatively, the one or more computer-readable media could take the form of one or more physical computer-readable media such as semiconductor or solid-state memory, magnetic tape, a removable computer diskette, a random-access memory (RAM), a read-only memory (ROM), a rigid magnetic disc, or an optical disk, such as a CD-ROM, CD-R/W or DVD.

The computer program is executable by the processor 402 to perform functions of the systems and methods described herein.

In an implementation, the modules, components, and other features described herein can be implemented as discrete components or integrated in the functionality of hardware components such as ASICS, FPGAs, DSPs, or similar devices.

A 'hardware component' is a tangible (e.g., non-transitory) physical component (e.g., a set of one or more processors) capable of performing certain operations and may be configured or arranged in a certain physical manner. A hardware component may include dedicated circuitry or logic that is permanently configured to perform certain operations. A hardware component may be or include a special-purpose processor, such as a field programmable gate array (FPGA) or an ASIC. A hardware component may also include programmable logic or circuitry that is temporarily configured by software to perform certain operations.

Accordingly, the phrase 'hardware component' should be understood to encompass a tangible entity that may be physically constructed, permanently configured (e.g., hardwired), or temporarily configured (e.g., programmed) to operate in a certain manner or to perform certain operations described herein.

In addition, the modules and components can be implemented as firmware or functional circuitry within hardware devices. Further, the modules and components can be implemented in any combination of hardware devices and software components, or only in software (e.g., code stored or otherwise embodied in a machine-readable medium or in a transmission medium).

### Operation of the automated storage and retrieval system

In operation, each bin 112 is given a unique identifier, which may be marked on the bin 112 using a computer-readable identifier (e.g., a barcode, quick-response code or radio-frequency identification tag) to ease identification of the bin 112. A database of the processing system 400 stores, in association with the unique identifier, the position and, optionally, content of each bin 112. When a bin 112 is moved (e.g., when it is retrieved from the grid 100), the database is updated to record its change in position.

When it is desired to retrieve a bin 112 from the grid 100, under control of the processing system 400, a robot 202, 204 is routed via the rail system 116 to the vertical column 102 including the storage cell where, according to the database, the bin 112 is positioned, and the lifting device 304, 312 is positioned (according to robot type) over the corresponding access opening 124, either adjacent or below the robot 202, 204. The robot 202, 204 lowers the gripping device 308 which engages, grips and lifts the bin 112 to the robot 202, 204. The robot 202, 204 then transports the bin 112, for example, to the drop-off port column 126, 128 for delivery to the port 130, 132 and subsequent processing external to the grid 100. In the event that the target or designated bin 112 is below other bins in the stack then the robot 202, 204 or multiple robots, which may be dedicated to the task, are controlled in a 'digging' operation to sequentially lift and reposition, temporarily or permanently, bins above the target bin 112 in order for it to be retrieved. It will be appreciated that other operations in relation to the bin 112 can be carried out in a similar manner. For example, a bin 112 can be delivered for storage in the grid 100 at the port 130, 132 of the pick-up port column 126, 128, gripped and lifted by a robot 202, 204 and delivered to the desired storage cell, bins above the desired position being repositioned if necessary as discussed above.

### Location Determination

In existing approaches for determining the location of robotic vehicles, location determination can be brought about by initially positioning the robotic vehicle at a known location in the automated storage and retrieval system. An instruction is sent to the robotic vehicle to travel to a new location. For example, the robotic vehicle can be instructed to move a first predetermined distance (or number of cells, in the case of a grid) forward, and then a second predetermined distance left of right. The control system then assumes that the robotic vehicle is at the expected location to which it was directed by the instructions. The robotic vehicle monitors whether it has moved the predetermined distances by, for example, counting the number of cells it has traversed.

However, complications can arise if, for example, the robotic vehicle miscounts the number of cells it has traversed, has overrun or stopped short of the desired location when stopping, or if an operator has placed the robotic vehicle in the wrong cell to begin with. Such complications can lead to the robotic vehicle not being located at an expected location. In some cases, a robotic vehicle being in such an unexpected location can lead to the robotic vehicle being at an incorrect location for storing and/or retrieving items thereby reducing system efficiency, or in some cases crashes between robotic vehicles.

It will be understood that the aforementioned complications in robotic vehicles becoming lost (i.e., not at expected locations) is not limited to the aforementioned existing approach for determining robotic vehicle locations, and other existing approaches to determining locations of robotic vehicles in automated storage and retrieval system can face similar complications.

A location determination system is provided in the present disclosure to enhance the location determination of robotic vehicles in an automated storage and retrieval system.

The present disclosure will now be described in general terms before implementations of the disclosure are described by way of example with reference to the drawings. The words "may" and "can" are used to refer to a feature that is optional, i.e. in some implementations of the disclosure, the feature is present, and in some implementations of the disclosure, the feature is not present.

A location determination system is provided. The location determination system can be configured for determining the location of a robotic vehicle in an automated storage and retrieval system.

The location determination system can comprise a first light detector. The first light detector can be configured to detect a first light signal emitted from a light source at a robotic vehicle in the automated storage and retrieval system.

The location determination system can comprise a second light detector. The second light detector can be configured to detect a second light signal emitted from the light source at the robotic vehicle.

The location determination system can comprise a location determining module. The location determining module can be configured perform triangulation. The triangulation can be performed using the first light signal and the second light signal to determine a location of the robotic vehicle in the automated storage and retrieval system.

The first light detector and the second light detector can be at a predetermined known distance from one another.

The location determining module can be configured to determine distances from the first light detector and/or the second light detector to the robotic vehicle by triangulation. The location determining module can be configured to translate these distances to coordinates in the automated storage and retrieval system.

The automated storage and retrieval system can comprise a grid across which one or more robotic vehicles traverse. The coordinates in the automated storage and retrieval system can correspond to cells in the grid.

The first light detector can be a first camera.

The second light detector can be a second camera.

The triangulation can be computer vision triangulation.

The automated storage and retrieval system can comprise a grid across which the robotic vehicle traverses. The first light detector and the second light detector can be arranged around the grid.

The location determination system can comprise a plurality of robotic vehicles configured to traverse the automated storage and retrieval system.

The plurality of robotic vehicles can be configured to emit light signals from respective light sources at each of the robotic vehicles.

The emitted light signals can be detected by the first light detector and the second light detector.

The light signal emitted by each robotic vehicle can be encoded to comprise a unique identifier corresponding to the robotic vehicle such that the detected first light signal and/or second light signal are encoded with the unique identifier.

The location determining module can be configured to determine the unique identifier from the encoded first light signal and/or the encoded second light signal.

The location determining module can be configured to compare the unique identifier to a robotic vehicle identification database comprising identities of the plurality of robotic vehicles and corresponding unique identifiers of the plurality of robotic vehicles.

The location determining module can be configured to identify the robotic vehicle based upon the comparison.

An on-board controller at the robotic vehicle can control the light source.

The emitted light signal can be encoded to pulse the unique identifier of the robotic vehicle such that each robotic vehicle in the automated storage and retrieval system is configured to emit a light signal with a unique pulse pattern.

The robotic vehicle can continuously emit the light signal from the respective light source.

The robotic vehicle can emit the light signal from the light source upon instruction by the location determining module.

The location determining module can be configured to determine that the robotic vehicle is at unknown location in the automated storage and retrieval system.

In response to determining that the robotic vehicle is at an unknown location, the location determining module can be configured to send an instruction to the robotic vehicle, by a communication channel between the location determining module and the robotic vehicle. The instruction can instructs the robotic vehicle to emit the light signal from the light source at the robotic vehicle.

The location determining module can be configured to update a location database. The location database can comprise locations of robotic vehicles in the automated storage and retrieval system. The location database can be updated to include the determined location of the robotic vehicle.

A routing module of the automated storage and retrieval system can use the determined location of the robotic vehicle to determine routing instructions.

The routing module can be configured to determine routing instructions to direct the robotic vehicle from the determined location to a destination in the automated storage and retrieval system.

The routing module can be configured to send the routing instructions to the robotic vehicle.

The light signal emitted from the robotic vehicle can be encoded to comprise an error code corresponding to an error determined to be experienced at robotic vehicle, such that the detected first light signal and/or second light signal are encoded with the error code.

The location determining module can be configured to determine the error code from the encoded first light signal and/or the encoded second light signal.

The location determining module can be configured to compare the error code to an error identification database. The error identification database can comprise a plurality of error codes and corresponding errors of robotic vehicles.

The location determining module can be configured to identify the error experienced by the robotic vehicle based upon the comparison.

The robotic vehicle is configured to emit the light signal encoded with the error code in response to the robotic vehicle determining that it is experiencing the error.

The on-board controller of the robotic vehicle can determine the error experienced by the robotic vehicle. The on-board controller can then control the light source to emit the light signal with the encoded error code.

The location determination system can comprise at least one reference point arranged at a fixed predetermined location.

The fixed predetermined location can be in/around the automated storage and retrieval system.

The location determining module can be configured to calibrate the triangulation using the at least one reference point.

The reference point or reference points can be at predetermined locations and predetermined angles relative to the light detectors.

The reference point or reference points in images/video captured by the light detectors can be used such that each location in the images/video is translated to relative angles from the optical axes of the light detectors. The relative angles can be used in the triangulation.

An automated storage and retrieval system is provided. The automated storage and retrieval system can comprise the aforementioned location determination system.

A method for determining the location of a robotic vehicle in an automated storage and retrieval system is provided.

The method can comprise detecting a first light signal emitted from a light source at a robotic vehicle in the automated storage and retrieval system, the first light signal detected by a first light detector.

The method can comprise detecting a second light signal emitted from the light source at the robotic vehicle, the second light signal detected by a second light detector.

The method can comprise performing, by a location determining module, triangulation using the first light signal and the second light signal to determine a location of the robotic vehicle in the automated storage and retrieval system.

The method can also comprise steps corresponding to any of the other features described with reference to the aforementioned location determination system.

A computer-readable medium is provided. The computer readable medium stores instructions thereon that, when executed by one or more processors in a location determination system of an automated storage and retrieve system, can cause a location determination system to detect a first light signal emitted from a light source at a robotic vehicle in the automated storage and retrieval system, the first light signal detected by a first light detector.

The instructions can cause the location determination system to detect a second light signal emitted from the light source at the robotic vehicle, the second light signal detected by a second light detector.

The instructions can cause the location determination system to perform triangulation using the first light signal and the second light signal to determine a location of the robotic vehicle in the automated storage and retrieval system.

The computer-readable medium can be a non-transitory computer readable medium.

The instructions can cause the location determination system to perform steps corresponding to any of the other features described with reference to the aforementioned location determination system.

Each possible combination of any of the above-described features forms part of the present disclosure. A plurality of instances of any feature may also be present.

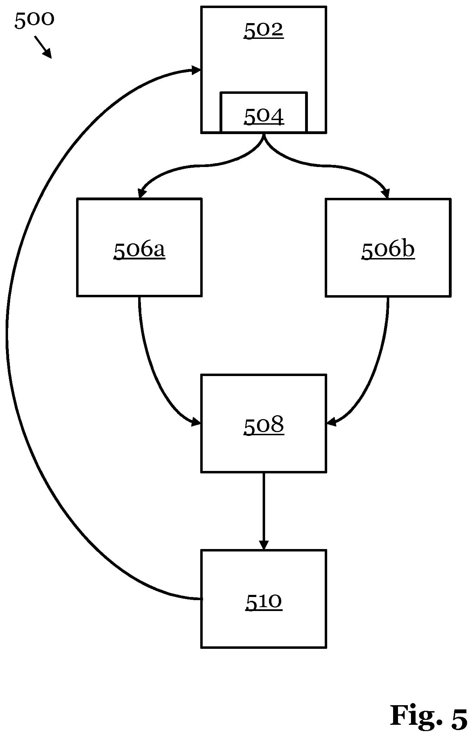

By way of example, implementations of the disclosure will now be described with reference to Figs. 5 to 8. Each possible combination of any features described below with any features described above also forms part of the disclosure.

Fig. 5 shows a block diagram of a location determination system 500.

The location determination system comprises a first light detector 506a and a second light detector 506b.

The first light detector 506a is configured to detect a first light signal emitted from a light source 504 at a robotic vehicle 502 that traverses the automated storage and retrieval system.

The second light detector 506b is configured to detect a second light signal emitted from the light source 504 at the robotic vehicle 502.

In a particular example, the first light detector is first camera. The second light detector is a second camera. Such cameras are digital cameras or video cameras, for example.

In the following description, the first light detector 506a will be referred to as the first camera 506a, and the second light detector 506b will be referred to as the second camera 506b. However, it will be understood that alternatively or additionally, one or both of the first camera 506a and the second camera 506b can be any type of imaging device capable of receiving photons emitted by a light source within a field of view of the imaging device.

The detected light signals emitted by the light source 504 on the robotic vehicle 502 are comprised in images or video captured by the first camera 506a and the second camera 506b. An object in the images or videos is the light source 504.

The cameras 506a, 506b are positioned around the automated storage and retrieval system such that each cell on the grid is capable of being within the field of view of the cameras 506a, 506b.

While in the presently discussed examples two cameras are described, it will be understood that the location determination system can comprise more than two cameras. For example, the location determination system can include as many cameras as necessary for each cell on the grid to be within fields of view of at least two cameras.

The light source 504 is configured as one or more lights on the body of the robotic vehicle 502 in a position that is visible to the cameras 506a, 506b. For example, the light source 504 is positioned on the top surface of the robotic vehicle 502. The robotic vehicle 502 is a container-handling robotic vehicle (such as those described with reference to Figs. 3A to 3C). Alternatively / additionally, the robotic vehicle 502 is any other type of robotic vehicle in an automated storage and retrieval system, such as but not limited to robotic maintenance vehicles, robotic recovery vehicles, robotic cleaning vehicles etc.

The robotic vehicle 502 has an on-board control system that controls the robotic vehicle 502. This includes controlling the movement of the robotic vehicle 502, and the performance of actions such as engaging and releasing containers. The on-board control system also controls the operation of the light source 504.

The location determination system 500 comprises a location determining module 508.

The location determining module 508 is configured to process the light signal emitted by light source 504 the robotic vehicle 502 and detected by the first camera 506a and the second camera 506b.

The location determining module 508 receives the first light signal and the second light signal from the first camera 506a and the second camera 506b by wired or wireless communication connections between the location determining module 508, the first camera 506a and the second camera 506b. These are received in the form of images or video captured by the first camera 506a and the second camera 506b. The images or video comprise the detected light signals emitted by the light source 504 on the robotic vehicle 502. In other words, the images or video include an object that is the light source 504.

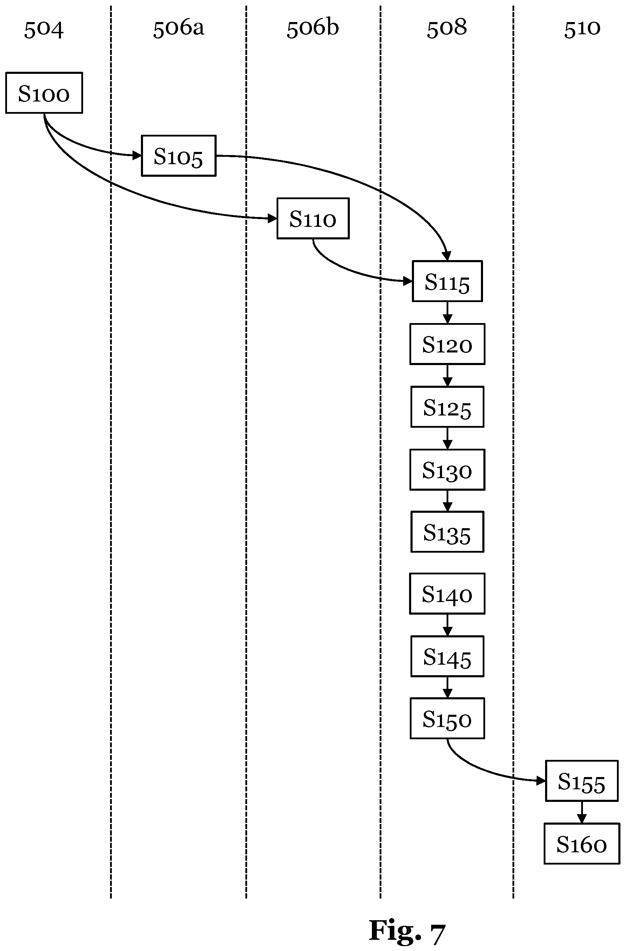

The location determining module 508 is configured to perform triangulation using the light signals to determine the location of the robotic vehicle. This is described in more detail with respect to Fig. 7.

A routing module 510 uses the location of the robotic vehicle 502, determined by the location determining module 508, to route the robotic vehicle 502 to a destination in the automated storage and retrieval system.

The routing module 510 is configured to determine instructions to direct the robotic vehicle 502 from the determined location to the destination.

The routing instructions are sent to the robotic vehicle 502. The routing instructions instruct the robotic vehicle to move forward, backward, left and/or right by determined distances (e.g., numbers of cell on the grid).

The routing module 510 is connected to a transmitter that sends the instructions by a wireless communication channel (e.g., using Wi-Fi or an IEEE 802 protocol). The robotic vehicle 502 has a receiver that receives the instructions over the wireless communication channel.

The robotic vehicle 502 receives the instructions, and executes the instructions to move from the determined location to the destination.

For example, the destination is the location at which the robotic vehicle 502 was intended to be positioned before it became lost. In another example the destination is a next destination the robotic vehicle was to be directed to when it became lost.

In one example, the location determining module 508 and the routing module 510 are implemented in the same computer or computing system that communicate with one another.

In another example, the location determining module 508 and the routing module 510 are implemented in separate computers or separate computing systems that are configured to communicate with one another through a wired or wireless communication channel.

In a further example, the location determining module 508 and the routing module 510 are implemented in the same software application.

The location determining module 508 and the routing module 510 are computational modules or applications configured to determine the location of, and determine routing instructions for, the robotic vehicle respectively.

For example, the location determining module 508 and the routing module 510 are software modules as components of a control system of the automated storage and retrieval system. In an example, the processing system 400 of Fig. 4 is such a control system.

The cameras 506a, 506b are positioned at predetermined locations around the grid. The distances between the cameras 506a, 506b and the orientations of the cameras 506a, 506b with respect to one another are predetermined parameters that are known to the location determining module 508, for the purposes of performing the triangulation. This predetermination is set and calibrated during a commissioning phase of the location determination system 500, for example when it is installed.

In some examples, the location determination system also includes one or more reference point.

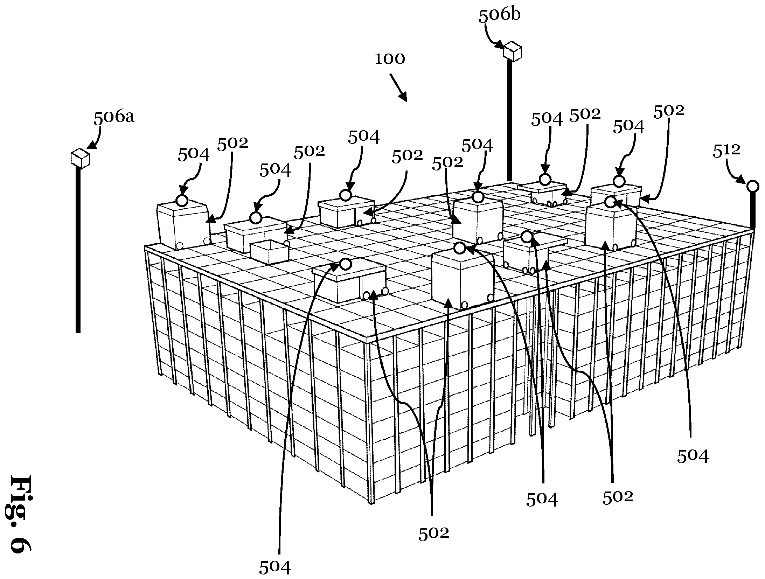

The reference point 512 (shown subsequently in Fig. 6, but not shown in Fig. 5) is arranged at a fixed predetermined location relative to the automated storage and retrieval system. This location is on or around the grid across which the robotic vehicles traverse. This is a location that is known to the location determining module 508 relative to the first camera 506a and the second camera 506b. The reference point 512 is positioned at a location that is within the field of view of the first camera 506a and the second camera 506b.

The location determining module 508 is configured to locate the reference point 512 in images captured by the first camera 506a and the second camera 506b.

Due to the reference point 512 being positioned at a fixed location relative to the first camera 506a and the second camera 506b, the location determining module 508 is configured to use the located reference point 512 in the images to calibrate the triangulation process for determining the position of the light source 504 on the robotic vehicle 502.

The reference point 512 is usable in calibrating the location determination system 500 during a commissioning phase.

For example, the reference point 512 in the captured image/video can be used such that each location in the images/videos captured by the cameras 506a, 506b is translated to relative angles from the optical axes of the cameras 506a, 506b.

Alternatively or additionally, the reference point is usable in the triangulation process. Because the reference point is at a fixed known location relative to the first camera 506a and the second camera 506b, the location of the light source 504 on the robotic vehicle 502 relative to the reference point 512 in the images captured by the first camera 506a and the second camera 506b is used to determine the position of the robotic vehicle 502 relative to the known location of the reference point 512 in the automated storage and retrieval system.

In an example, the reference point 512 is a light source. The light source emits a reference signal with an encoded reference point identifier. The encoding comprises flashing or switching the intensity of the light in predetermined intervals. The location determining module is configured the identify the reference point with this encoded identifier.

In other examples, the reference point 512 is a visible indicia location within the automated storage and retrieval system that acts as an identifier of the reference point 512. The location determining module 508 is configured the identify the reference point 512 by recognising the indicia.

When there are a plurality of references points 512 are included in the automated storage and retrieval system, each reference point 512 is at a location that is known to the location determining module 508 relative to the first camera 506a and the second camera 506b. The location determining module is configured to identify the reference point 512 in the images detected by the first camera 506a and the second camera 506b (e.g., with a look-up table of identifiers and corresponding reference point identities), and the known positions of the reference points 512 in the automated storage and retrieval system.

Therefore, the location determining module 508 is able to distinguish between each reference point 512, and associate the identified reference point 508 in the image/video with the known position of the reference point 512 in/around the automated storage and retrieval system.

Fig. 6 shows a perspective view of an exemplary representation of the location determination 500 system of Fig. 5 integrated into the automated storage and retrieval system comprising the grid 100 of Fig. 1.

As can be seen in Fig. 6, a plurality of container-handling robotic vehicles 502 (such as those described with reference to Figs. 3A to 3C) traverse the grid 100 of the automated storage and retrieval system. Each of the container-handling robotic vehicles 502 has a light source 504 mounted on the top surface. The light source is visible to the first camera 506a and the second camera 506b. The first camera 506a and the second camera 506b are positioned around the grid 100.

In the example of Fig. 6, the first camera 506a and the second camera 506b are mounted on posts such that each have a field of view across the grid 100. In other examples, the cameras are mounted in other ways, such as on side fences of the grid 100 or suspended from above the grid 100, amongst others.

The first camera 506a and the second camera 506b are configured to detect light emitted from a light source 504 on a container-handling robotic vehicles 502. The location determining module 508 (not shown in Fig. 6) then receives these light signals (for example, comprised in images or videos captured by the cameras) and performs triangulation to determine the location of the container-handling robotic vehicle 502 based on predetermined and known positions/orientations of the cameras 506a, 506b relative to one another.

While Fig. 6 shows the robotic vehicles 502 as container-handling robotic vehicles (such as those described with reference to Figs. 3A to 3C), it will be readily understood that the teaching herein can be applied to any other type of robotic vehicle in an automated storage and retrieval system, such as but not limited to robotic maintenance vehicles, robotic recovery vehicles, robotic cleaning vehicles etc.

While Fig. 6 shows two cameras 506a, 506b, it will be readily understood that any number of cameras can be used such that each cell on the grid is within the field of view of at least two cameras for triangulation purposes.

Fig. 7 shows a flow chart of steps involved in a location determination process using the location determination system 500 of Fig. 5.

At step S100, the light signal is emitted from the light source 504 at the robotic vehicle 502.

The robotic vehicle 502 has an on-board control system that controls the emission of light from the light source 504.

The on-board control system controls the light source 504 such that the emitted light is encoded with a unique identifier of the robotic vehicle 502.

The on-board control system controls the light source 504 to encode the emitted light to comprise the unique identifier by pulsing the emitted light. In an example, such pulsing comprises switching the light source 504 on and off to encode the signal with on/off intervals. Alternatively or additionally, the pulsing comprises switching the intensity or brightness of the emitted light with intervals of differing intensity or brightness levels.

In an alternative, the on-board control system controls the light source 504 to encode the emitted light to comprise the unique identifier by switching colours of emitted light with intervals of different colours.

When the automated storage and retrieval system comprises a plurality of robotic vehicles 502, these robotic vehicles 502 have a different unique identifiers. That is, the on-board control system at each robotic vehicle 502 is preconfigured to encode the respective emitted light signal to comprise the unique identifier of said robotic vehicle 502. In this way, the location determining module 508 is able to determine the robotic vehicle 502 that is being located using this unique identifier.

The emitting of the light signal from the light source 504 is triggered in different ways in different implementations.

In a first implementation, the location determining module 508 determines that the robotic vehicle 502 is at unknown location in the automated storage and retrieval system. For example, such a determination is the result of identifying that the robotic vehicle 502 has not arrived at an expected location, or an expected action has not been performed.

In response to determining that the robotic vehicle 502 is at an unknown location, the location determining module 508 sends an instruction to the robotic vehicle 502 by a communication channel between the location determining module 508 and the robotic vehicle 502.

The location determining module 508 is connected to a transmitter that sends the instruction by the wireless communication channel (e.g., using Wi-Fi or an IEEE 802 protocol). The robotic vehicle 502 has a receiver that receives the instructions over the wireless communication channel.

The instruction instructs the robotic vehicle 502 to emit the light signal from the light source 504 at the robotic vehicle 502.

The robotic vehicle 502 receives the instruction. In response to the receiving the instruction, the on-board controller at the robotic vehicle 502 controls the light source 504 to emit the light signal.

In this way, only a robotic vehicle 502 that is being located is emitting light from the respective light source 504. This can reduce noise in the light signals detected by the first camera 506a and the second camera 506b, compared to several or all of the robotic vehicles emitting their respective light signals at the same time. Moreover, this can reduce the likelihood of conflating signals from two different robotic vehicles, thereby reducing the likelihood of an incorrect location determination.

In a second implementation, the robotic vehicles 502 in the automated storage and retrieval system are configured to continuously emit their respective light signals from their respective light sources. The location determining module 508 is then able to locate any of the robotic vehicles at any time. This allows for robotic vehicle movements to be tracked, providing granular detail in the locations of the robotic vehicles.

In some examples, the location determination system 500 constantly monitors the locations of the robotic vehicles 502 by determining their locations at predetermined intervals. In this way, the control system of the automated storage and retrieval system constantly has up-to-date system information regarding where each robotic vehicle 502 is located and can perform corrective actions in re-routing robotic vehicles 502 that have travelled to an incorrect location.

In another example, the location determination system 500 determines the location of a robotic vehicle 502 when determining that the robotic vehicle 502 is lost (e.g., the robotic vehicle 502 has not arrived at an expected location or an expected action has not been performed by the robotic vehicle 502). Should the robotic vehicle 502 have become lost because it has malfunctioned and is no longer in communication with the controller of the automated storage and retrieval system, the location determining module 508 may not be able to instruct the robotic vehicle 502 to begin emitting the light signal. However, because the robotic vehicle 502 is constantly emitting the light signal from the light source 504, the location determining module 508 can still locate the robotic vehicle 502 even if the communication link is lost. In other words, by constantly emitting the light signal from the light source 504 of the robotic vehicle 502, a communication link between the robotic vehicle 502 and the control system of the automated storage and retrieval system is not required for the location determination to take place.

In a third implementation, the emitting of the light signal from the light source 504 can be triggered in response to the on-board control system of the robotic vehicle 502 determining the robotic vehicle has experienced an error. Such errors include, but are not limited to, mechanical errors, electrical errors, software errors etc. Such errors can also include communication system errors; if the communication with a system controller that instructs the robotic is not functioning (e.g., if the communication connection is lost), the robotic vehicle can send an error code encoded in the emitted light signal indicating this to the location determining module. In this way, the system becomes aware that the robotic vehicle 502 has lost communication capability with the system and remedial action can be taken. In other words, the system can become aware of a problem that the robotic vehicle 502 has encountered even if the communication link between the system and the robotic vehicle 502 is down.

More generally, such errors can be considered any error that inhibits the robotic vehicle 502 from performing its usual functionality.

Locating a robotic vehicle 502 in such error scenarios is particularly useful because a robotic vehicle 502 suffering from an error may breakdown or have already broken down, at an unknown location on the grid. This can lead to other robotic vehicles crashing into the broken robotic vehicle if it is at an unexpected location.

When the on-board control system of the robotic vehicle 502 determines that the robotic vehicle 502 is experiencing an error, the on-board control system controls the light source 504 to emit the light signal for the location determination system 500 to determine the location of the robotic vehicle 502.

In a particular example, different errors at the robotic vehicle 502 have different assigned error codes. The on-board controller at the robotic vehicle 502 encodes the emitted light signal to comprise the error code corresponding to the error that is determined to have occurred.

Upon receipt of the first light signal and/or second light signal that is encoded with the error code, the location determining module 508 is configured to determine the error code and thereby identify an error the robotic vehicle 502 is experiencing. This is described in more detail with respect to step S135, S140, S145.

As such, the location determining module 508 is capable of both determining the location of the robotic vehicle 502 and the error experienced by the robotic vehicle 502. In this way, the robotic vehicle 502 can be repaired remotely, if appropriate, while also routing other robotic vehicles around the broken vehicle to avoid collisions. If physical repair is required, the repair can be determined before arriving the at the robotic vehicle 502, based on the error code, so that appropriate parts can be brought to the determined location. Likewise, if the broken robotic vehicle 502 is recovered from the determined location by a recovery vehicle to a repair area, repair can be readied in advance at the repair area with the knowledge of the error based on the error code. As such, system downtime is reduced.

In some cases, the encoded light signal emitted from the light source 504 comprises both the unique identifier of the robotic vehicle 502 and the error code of the error that is being experienced. In this way, the location determining module 508 is able to both identify the robotic vehicle 502 and the error that the robotic vehicle 502 is experiencing.

At step S105, the first light signal is detected by the first camera 506a.

At step S110, the second light signal is detected by the second camera 506b.

The first light signal and the second light signal correspond to the same light emitting processes at the light source 504. The first light signal is the portion of photons emitted in the light signal from the light source 504 that arrive at the first camera 506a. The second light signal is the portion of the photons emitted in the light signal from the light source 504 that arrive at the second camera 506b.

The first light signal and the second light signal are communicated to the location determining module 508 through the communication connections between the first camera 506a, second camera 506b and location determining module 508. The first light signal is comprised in an image, series of images, or video captured by the first camera 506a. The second light signal is comprised in an image, series of images, or video captured by the second camera 506b. Said images or video are communicated to the location determining module 508.

At step S115, the first light signal and the second light signal, detected by the first camera 506a and the second camera 506b, are received at the location determining module 508.

That is, the images and/or video comprising the first light signal and the second light signal are received at the location determining module 508.

Images, sequences of images, or video are sent from the first camera 506a and/or the second 506b to the location determining module 508 for the subsequent step S150 wherein the triangulation is performed. Sequences of images or video are be sent from the first camera 506a and/or the second 506b to the location determining module 508 for the subsequent steps S120 and S135 wherein the encoded codes (e.g., unique identifier and/or error code) are determined from the encoding. These can be the same sequences of images or video used in step S150 for the triangulation.

In implementations that include a unique identifier encoded into the emitted light signal, the location determining module 508 performs steps S120, S125, S130.

At step S120, the location determining module 508 determines the unique identifier of the robotic vehicle 502 from encoding in the first light signal and/or the second light signal.

The location determining modules 508 decodes the encoding in the first light signal and/or the second light signal to determine the unique identifier encoded therein.

For example, a sequence of images or a video can be sent from the first camera 506a and/or the second 506b to the location determining module. The location determining module 508 decodes any codes that are encoded into the light signal. In the example of using pulses to encode the unique ID, the location determining module 508 analyses the pulse pattern across the sequence of images or in the video.

At step S125, the location determining module 508 compares the unique identifier to a robot identification database comprising identities of the plurality of robotic vehicles and corresponding unique identifiers of the plurality of robotic vehicles.

Such unique identifiers and identities of robotic vehicles are predetermined. The robot identification database is stored in computer storage accessible to the location determining module 508.

At step S130, the location determining module identifies the robotic vehicle 502 based upon the comparison.

The location determining module 508 performs a look up in the robot identification database to identify the robotic vehicle 502 that corresponds to the unique identifier.

In implementations that include an error code encoded into the emitted light signal, the location determining module 508 performs steps S135, S140, S145.

At step S135, the location determining module 508 determines an error code that is encoded in the in the first light signal and/or the second light signal.

The location determining module 508 decodes the encoding in the first light signal and/or the second light signal to determine the error code encoded therein in a similar manner to that described for the unique identifier at step S120; the same detail applies but is not repeated for brevity.

At step S140, the location determining module 508 compares the error code to an error identification database comprising a plurality of error codes and corresponding errors of robotic vehicles.

Such error codes and corresponding errors are predetermined. The error identification database is stored in computer storage accessible be the location determining module 508.

At step S145, based on the comparison, the location determining module 508 identifies the error being experienced by the robotic vehicle 502.

The location determining module 508 performs a look up in the error identification database to identify the error that corresponds to the error code.

Some implementations have no encoding (i.e., no unique identifier or error code is encoded into the emitted light signal) or corresponding processing. In such implementation steps S120 to S145 are omitted.

Some implementations include the unique identifier encoding in the emitted light signal and corresponding processing (i.e., steps S120, S125, S130) without the error code encoding in the emitted light signal and processing. In such implementations, steps S135, S140 and S145 are omitted.

Some implementations include the error code encoding in the emitted light signal and corresponding processing (i.e., steps S135, S140 and S145) without the unique identifier encoding in the emitted light signal and corresponding processing. In such cases, steps S120, S125, S130 are omitted.

Some implementations include both the unique identifier encoding in the emitted light signal and corresponding processing (i.e., steps S120, S125, S130) and the error code encoding in the emitted light signal and corresponding processing (i.e., steps S135, S140 and S145).

At step S150, the location determining module 508 performs triangulation using the first light signal and the second light signal to determine the location of the robotic vehicle 502 in the automated storage and retrieval system.

The triangulation is performed on images or videos received at the location determining module 508 from the first camera 506a and the second camera 506b. The images or video comprise the detected light signals emitted from the light source 504 at robotic vehicle 502. In other words, there is an object in the images/videos corresponds to the light source. The location determining module 508 performs triangulation based on this object in the images/videos.

Through triangulation, the location determining module 508 determines the distances between the cameras 506a, 506b and the light source 504 of the robotic vehicle. When having determined these distances by triangulation, predetermined relationships between the distances from one or both cameras 506a, 506b to each cell of the grid are used by the location determining module 508 to determine the grid cell in which the robotic vehicle 502 is located.

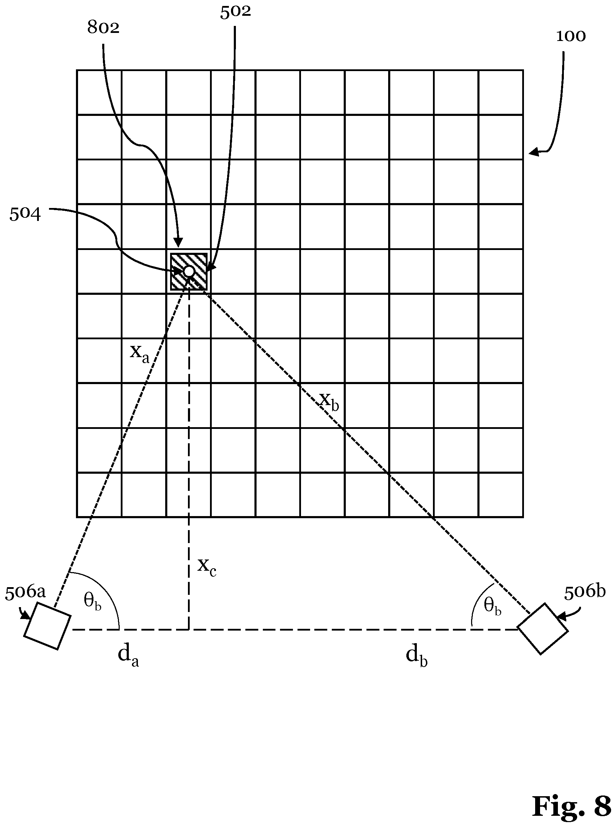

Fig. 8 shows an explanatory diagram of the concept of using triangulation to determine the position of a robotic vehicle 502.

Triangulation works on the premise that the first camera 506a and the second camera 506b are at a predetermined distance apart from one another along the line dₐ + d_{b}.

The light source 504 on the robotic vehicle 502 is at a first unknown distance xₐ from the first camera 506a.

The light source 504 on the robotic vehicle 502 is at a second unknown distance x_{b} from the second camera 506b.

The angle θₐ, between the line dₐ + d_{b} and the line xₐ is known.

The angle θ_{b}, between the line dₐ + d_{b} and the line x_{b} is known.

The line x_{c} extends perpendicularly from the line dₐ + d_{b} to the camera light source 504.

On this basis: ${d}_{a} + {d}_{b} = \frac{{x}_{c}}{{tanθ}_{a}} + \frac{{x}_{c}}{{tanθ}_{b}}$ ${d}_{a} + {d}_{b} = {x}_{c} \left(\frac{{cosθ}_{a}}{{sinθ}_{a}}+\frac{{cosθ}_{b}}{{sinθ}_{b}}\right)$ ${d}_{a} + {d}_{b} = {x}_{c} \left(\frac{sin \left({θ}_{a}+{θ}_{b}\right)}{{sinθ}_{a} {θ}_{b}}\right)$ ${x}_{c} = \left({d}_{a}+{d}_{b}\right) \left(\frac{{sinθ}_{a} {θ}_{b}}{sin \left({θ}_{a}+{θ}_{b}\right)}\right)$ With x_{c} determined, dₐ and d_{b} are determined as: ${d}_{a} = \frac{{x}_{c}}{{tanθ}_{a}}$ ${d}_{b} = \frac{{x}_{c}}{{tanθ}_{b}}$

The calculated values for the distances x_{c} and dₐ relative to the first camera 506a can then be compared with predetermined distances from the first camera 506a to each cell in the grid to determine that the robotic vehicle 502 is in the cell 802.

Likewise, the calculated values for the distances x_{c} and d_{b} relative to the second camera 506b can then be compared with predetermined distances from the second camera 506b to each cell in the grid 100 to determine that the robotic vehicle 502 is in the cell 802.

In the process of Fig. 7, this determination of the location by triangulation can be performed in a plurality of ways. These triangulation processes need not follow the specifics described with reference to Fig. 8, but rather utilise the concept of triangulation. Any suitable technique for performing triangulation using at least two light detectors, cameras or imaging devices are implementable in the present location determination system 500. Some examples of such techniques are described as follows, but it will be readily understood that the location determination system 500 need not be limited to only performing triangulation with these techniques.

In a first example, computer vision triangulation can be used to determine the location of the robotic vehicle 502. Computer vision triangulation uses computer stereo vision with two images of the same subject (i.e., the light source 504) from at least two different positions (i.e., the positions of the first camera 506a and the second camera 506b). Such computer vision triangulation determines a point in space (i.e., the light source 504) using the projection of this point on the two images (or more than two images when more than two cameras are used). For example this is performed using predetermined parameters of the camera projection function represented by the camera matrices for the cameras involved. Using parameters of the cameras, including the distance between the lens and the image plate in each camera, and the known distance between the cameras, as well as the displacement of the subject (i.e., the light source 504 on the robotic vehicle 502) in the images, the distance to the subject from the cameras 506a, 506b is determined.

In a second example, the cameras 506a, 506b can be rotatably mounted such that when each camera 506a, 506b rotates, the field of view of the camera sweeps across the grid 100 (or a portion of the grid 100). Each point on the grid 100 is within the field of view of at least two cameras when they sweep across the grid.

The cameras 506a, 506b sweep across the grid 100 and the light source 504 is identified in the images/videos from two cameras 506a, 506b. The two cameras 506a, 506b rotate such that the light source 504 is centred on their optical axes. The angles of each camera 506a, 506b relative to a straight line between the cameras 506a, 506b then constitutes θₐ and θ_{b} as discussed with reference to Fig. 8, and the straight line between the cameras constitutes dₐ + d_{b}. The angles θₐ and θ_{b} are both known from an orientation system of the cameras 506a, 506b, and their rotation relative to this orientation system (i.e., a controller controls the angles the cameras sweep through, and therefore these angle parameters are derivable from the control of the camera rotation). The distance of the line dₐ + d_{b} is predetermined during a commissioning stage of the location determination system 500. The location of the robotic vehicle 502 is then determined in a corresponding manner to that described with reference to Fig. 8 using the predetermined value of dₐ + d_{b} and the determined values of angles θₐ and θ_{b} from the rotations of the cameras 506a, 506b.

For this example, cameras or image detectors with a narrow field of view can be used. In this way, when the object that corresponds to the light source 504 is in the image/video, the light source 504 is approximately on the optical axis of the camera or image detector.

In a third example, the triangulation can comprise the use of one or more reference points 512 for a parallax measurement.

The first camera 506a and the second camera 506b are separated by a known distance. The position of the robotic vehicle 502 relative to the one or more reference points 512 is used in determining the position of the robotic vehicle 502 upon the grid 100.

A reference point 512 is positioned within a portion of the automated storage and retrieval system, for example, on a wall, on the rail system, or on the ceiling.

From the perspective of the first camera 506a, the robotic vehicle 502 is separated from the reference point 512 by a first angle. From the perspective of the second camera 506b, the robotic vehicle 502 is separated from the reference point 512 by a second angle.

Using the known distance between the first camera 506a and second camera 506b, and the first angle, and the second angle, the location of the robotic vehicle 502 is determined using the parallax angle which is the difference between the first angle and the second angle.

In a simplified case: $Parallax angle = First Angle - Second Angle$ $Distance to robotic vehicle = \frac{Distance between cameras}{sin \left(parallax angle\right)}$

In some examples, the location is determined without a reference point positioned upon / around the grid. For example, a reference point instead comprises a portion of the field of view of the camera. That is, the centre of the field of view, for example, acts as a reference point, and the angle between the reference point and the robotic vehicle comprises the first angle.

In a fourth example, one or more reference points 512 are used in determining the location of the robotic vehicle.

The fixed angle of each camera 506a, 506b (i.e., the optical axis of each camera) relative to the reference point(s) 512 is predetermined during a commissioning stage of the location determination system 500. In the image/video captured by each camera 506a, 506b the offset of the reference point 512 to the centre of the image (i.e., the optical axis) corresponds to the known fixed angle of the optical axis of the camera 506a, 506b to the reference point 512. With this, and the known field of view of the camera 506a, 506b, the position of an object in the image/video can be used to infer the angle of said object to the optical axis of the camera by extrapolation.

Therefore, the angle of the light source 504 on the robotic vehicle 502 relative to the optical axis of each camera is inferable from the position of the light source in the image/video from each camera. From these angles, the angles θₐ and θ_{b} relative to the straight line between the cameras are determined. Then, with the known distance between the cameras, the location of the robotic vehicle can be triangulated.

As discussed, the triangulation processing is not limited to the aforementioned example implementations, and any suitable triangulation processing that uses two or more cameras can be used.

The location determining module 508 can update a system state database to specify that the robotic vehicle 502 is at the determined location.

Returning to Fig. 7, at step S155, the routing module 510 determines routing instructions to direct the robotic vehicle 502 from the determined location to a destination in the automated storage and retrieval system.

In an example, the routing module 510 retrieves the determined location of the robotic vehicle 502 from the system state database. In another example, the location determining module 508 communicates the determined location to the routing module 510.

The routing instructions can instruct the robotic vehicle 502 to travel forward/backward by X cells, and/or left/right by Y cells, to reach the destination.

At step S160, the routing module 510 sends the routing instructions to the robotic vehicle 502 by the communication channel between the routing module 510 and the robotic vehicle 502.

The robotic vehicle 502 receives the instructions and executes the instructions to travel to the destination.

When the lost robotic vehicle 502 has broken down (for example as indicated by an encoded error code in the emitted light signal, or the by robotic vehicle 502 not responding to routing instructions), and when this broken down robotic vehicle 502 has been located, the routing module 510 can determine routing instructions for other robotic vehicles so that they avoid the determined location of the broken down robotic vehicle 502. This avoids collisions leading to system downtime.

The routing module 510 can also block grid cells around the determined location of the broken down robotic vehicle 502 such that routing sent to other robotic vehicles causes the other robotic vehicles to not cross these cells. In this way, the broken down robotic vehicle 502 can be recovered whilst avoiding collisions between the other robotic vehicles and the broken down robotic vehicle 502, as well as recovery vehicles and/or human operators repairing/recovering the broken down robotic vehicle 502.

Whilst the foregoing examples have been described with reference to robotic vehicles that traverse a grid, it will be readily understood that in alternative implementations the location determination system can also be implemented in other areas of an automated storage and retrieval system in which robotic vehicles operate but not on a grid. In other alternative implementations, the location determination system can be implemented in an automated storage and retrieval system in which there is no grid, and the robotic vehicles do not operate on a grid. In such cases, a coordinate system for the locations in the automated storage and retrieval system can be used.

It is to be understood that the above description is intended to be illustrative, and not restrictive. Many other implementations will be apparent to those of skill in the art upon reading and understanding the above description. Although the present disclosure has been described with reference to specific example implementations, it will be recognized that the disclosure is not limited to the implementations described, but can be practiced with modification and alteration within the spirit and scope of the appended claims. Accordingly, the specification and drawings are to be regarded in an illustrative sense rather than a restrictive sense. The scope of the disclosure should, therefore, be determined with reference to the appended claims, along with the full scope of equivalents to which such claims are entitled.

## Claims

1. A location determination system for determining the location of a robotic vehicle in an automated storage and retrieval system, the location determination system comprising:
a first light detector configured to detect a first light signal emitted from a light source at a robotic vehicle in the automated storage and retrieval system; and
a second light detector configured to detect a second light signal emitted from the light source at the robotic vehicle;
a location determining module configured perform triangulation using the first light signal and the second light signal to determine a location of the robotic vehicle in the automated storage and retrieval system.

2. The location determination of system of claim 1, wherein:
the first light detector is a first camera; and/or
the second light detector is a second camera.

3. The location determination system of claim 2, wherein the triangulation is computer vision triangulation.

4. The location determination system of any preceding claim, wherein the automated storage and retrieval system comprises a grid across which the robotic vehicle traverses, and the first light detector and the second light detector are arranged around the grid.

5. The location determination system of any preceding claim, further comprising a plurality of robotic vehicles configured to traverse the automated storage and retrieval system, wherein the plurality of robotic vehicles are configured to emit light signals from respective light sources at each of the robotic vehicles, the emitted light signals to be detected by the first light detector and the second light detector;
wherein the light signal emitted by each robotic vehicle is encoded to comprise a unique identifier corresponding to the robotic vehicle such that the detected first light signal and/or second light signal are encoded with the unique identifier; and
wherein the location determining module is configured to:
determine the unique identifier from the encoded first light signal and/or the encoded second light signal;
compare the unique identifier to a robotic vehicle identification database comprising identities of the plurality of robotic vehicles and corresponding unique identifiers of the plurality of robotic vehicles; and
identify the robotic vehicle based upon the comparison.

6. The location determination system of claim 5, wherein the emitted light signal is encoded to pulse the unique identifier of the robotic vehicle such that each robotic vehicle in the automated storage and retrieval system is configured to emit a light signal with a unique pulse pattern.

7. The location determination system of any preceding claim, wherein the robotic vehicle continuously emits the light signal from the light source; or
wherein the robotic vehicle emits the light signal from the light source upon instruction by the location determining module, and the location determining module is configured to:
determine that the robotic vehicle is at unknown location in the automated storage and retrieval system; and in response to determining that the robotic vehicle is at an unknown location:
send an instruction to the robotic vehicle, by a communication channel between the location determining module and the robotic vehicle, wherein the instruction instructs the robotic vehicle to emit the light signal from the light source at the robotic vehicle.

8. The location determination system of any preceding claim, wherein the location determining module is further configured to update a location database comprising locations of robotic vehicles in the automated storage and retrieval system to include the determined location of the robotic vehicle.

9. The location determination system of any preceding claim, wherein a routing module of the automated storage and retrieval system uses the determined location of the robotic vehicle to determine routing instructions, wherein the routing module is configured to:
determine routing instructions to direct the robotic vehicle from the determined location to a destination in the automated storage and retrieval system; and
send the routing instructions to the robotic vehicle.

10. The location determination system of any preceding claim, wherein the light signal emitted from the robotic vehicle is encoded to comprise an error code corresponding to an error determined to be experienced at robotic vehicle, such that the detected first light signal and/or second light signal are encoded with the error code; and
the location determining module is configured to determine the error code from the encoded first light signal and/or the encoded second light signal;
compare the error code to an error identification database comprising a plurality of error codes and corresponding errors of robotic vehicles; and
identify the error experienced by the robotic vehicle based upon the comparison.

11. The location determination system of claim 10, wherein the robotic vehicle is configured to emit the light signal encoded with the error code in response to the robotic vehicle determining that it is experiencing the error.

12. The location determination system of any preceding claim, wherein the location determination system further comprises at least one reference point arranged at a fixed predetermined location, wherein the location determining module is configured to calibrate the triangulation using the at least one reference point.

13. An automated storage and retrieval system comprising the location determination system of any preceding claim.

14. A method for determining the location of a robotic vehicle in an automated storage and retrieval system, the method comprising:
detecting a first light signal emitted from a light source at a robotic vehicle in the automated storage and retrieval system, the first light signal detected by a first light detector;
detecting a second light signal emitted from the light source at the robotic vehicle, the second light signal detected by a second light detector; and
performing, by a location determining module, triangulation using the first light signal and the second light signal to determine a location of the robotic vehicle in the automated storage and retrieval system.

15. A computer-readable medium storing instructions thereon that, when executed by one or more processors in a location determination system of an automated storage and retrieve system, cause a location determination system to:
detect a first light signal emitted from a light source at a robotic vehicle in the automated storage and retrieval system, the first light signal detected by a first light detector;
detect a second light signal emitted from the light source at the robotic vehicle, the second light signal detected by a second light detector; and
perform triangulation using the first light signal and the second light signal to determine a location of the robotic vehicle in the automated storage and retrieval system.
